# EUROPEAN PATENT SPECIFICATION

(11) **EP 3 112 766 B1**
(45) Date of publication and mention of the grant of the patent: **02.01.2019**
(21) Application number: 16176219.0
(22) Date of filing: 24.06.2016
(51) Int. Cl.: F24F 11/30, F24D 15/02, F24D 19/10, F24F 1/00, F24F 12/00, G05B 1/00

(54) **CONTROLLER OF HEAT SOURCE EQUIPMENT**
STEUERUNG EINER WÄRMEQUELLENAUSRÜSTUNG
ORGANE DE COMMANDE D'ÉQUIPEMENT DE SOURCE DE CHALEUR

(30) Priority: 02.07.2015 JP 2015133600
(43) Date of publication of application: 04.01.2017
(73) Proprietor: Toshiba Carrier Corporation, Kawasaki-shi, Kanagawa 212-8585 (JP)
(72) Inventor: SUGIYAMA, Akiyoshi, Shizuoka-ken, 416-8521 (JP); MITSUMORI, Shinsuke, Shizuoka-ken, 416-8521 (JP); AOKI, Kazuhito, Shizuoka-ken, 416-8521 (JP)
(74) Representative: Rehmann, Thorsten

(56) References cited:
- US-A1- 2008 121 729
- US-A1- 2010 106 318
- US-A1- 2010 106 319

## Description

### FIELD

Embodiments described herein relate generally to a controller for heat source equipment for an air handling unit in which outside air is drawn thereinto, and then made to pass through a heat exchanger, and the air from the heat exchanger is supplied into space to be air-conditioned.

### BACKGROUND

US 2008/0121729 relates to a controller for a climate control system with a user control interface. The climate control system comprises a controller that is directly connected to a control interface for interaction with a user, a conditioning apparatus for heating or cooling the air, a valve pump system for controlling the airflow and a wireless link in connection with wireless thermometers. The user may adjust, for example, the temperature in a room of a home via a first screen of the control interface. The control interface then sends a signal to the controller which in turn manages the conditioning apparatus and valve pump system to establish the desired room temperature which is measured by the wireless thermometers. However, there is a second screen that contains constraint settings that may prevent the temperature settings on the first screen from being carried out by the controller so that the desired room temperature cannot be reached. To resolve this issue, the user may simply adjust the constraint settings in the second screen of the control interface.

US 2010/0106318 A1 relates to an alarm and diagnostic system for a climate control network. A system determines a fault condition when a demand unit, e.g. an air handler, a furnace or a compressor, fails to provide its primary service as expected. It therefore compares the temperature of discharge air of the demand unit, as measured by a discharge temperature sensor, to an expected trend. If the measured value differs from the expected trend, mitigating steps may be taken.

US 2010/0106319 A1 describes a controller according to the preamble of claim 1, and specifically relates to a method of controlling equipment in a HVAC system. The HVAC system comprises an outdoor unit and an indoor unit. A heat pump controller (HPC) accepts messages addressed thereto via the data bus and controls a compressor and a fan motor in response thereto. An active subnet controller (aSC) is another device on the data bus, which may send these messages. When a fault condition, for example an icing condition or a water level in a drip pan of an air handler 605 has exceeded a predetermined level, the aSC may, for example, disable cooling operation of a heat pump and disable cooling operation of a heat pump while commanding a blower to continue moving air over the heat exchanger at a same or a different rate as a rate used during the cooling operation.

Further, the following direct expansion type of air handling unit is known: a heat exchanger is provided along with an air blower in a case, the air blower is operated to guide outside air into the case and cause it to pass through the heat exchanger, and the air from the heat exchanger is supplied as air for air conditioning into space to be air-conditioned, the heat exchanger being connected to hear source equipment (outdoor equipment) by a refrigerant pipe.

As an example of a control over the operation of the heat source equipment, which is effected by the air handling unit, a direct digital controller (DDC) which can be set in control conditions is used to control the operations and capabilities of the air handling unit and the heat source equipment such that the temperature of the air for air conditioning reaches a set temperature. In this case, the DDC functions as a controller for the air handling unit.

In the DDC, control conditions can be written and rewritten as necessary by a worker who installs the air handling unit. To be more specific, the DDC is programmed to perform an appropriate control operation, whereby it can control the heat source equipment of the air handling unit to operate appropriately in accordance with environments such as the plate where it is installed. On the other hand, the heat source equipment performs an operation corresponding to operation content specified by an instruction given from the DDC.

The DDC merely instructs the heat source equipment to operate with a necessary capability. The heat source equipment is controlled to actually operate with a capability specified by the instruction from the DDC. However, if not so, the temperature of air for air conditioning cannot reach the set temperature, and the space to be air-conditioned will be uncomfortable.

There is a case where the heat source equipment gives a higher priority to a protection control of components in the heat source equipment than to the operation corresponding to the operation content specified by the instruction from the DDC. Furthermore, a defrosting operation for removing frost forming on an outdoor heat exchanger in the heat source equipment is also more preferentially performed than the operation corresponding to the operation content specified by the instruction from the DDC.

Embodiments described herein aim to provide a controller of heat source equipment for an air handling unit, which compensates for such a capability control as described above that is effected in response to an instruction if the heat source equipment is not controlled to operate with a specified capability, and ensures that the space to be air-conditioned is comfortable.

According to a controller for heat source equipment connected to an air handling unit as recited in claim 1, the air handling unit includes an air blower which draws in outside air, a heat exchanger which causes the outside air drawn in by the air blower and a refrigerant fed from the heat source equipment to exchange heat with each other and supplies as air for air conditioning, air passing through the heat exchanger to space to be air-conditioned, a direct digital controller controlling the air blower and giving an instruction in operation content to the heat source equipment, the controller being connected between the direct digital controller and the heat source equipment, receiving from the direct digital controller the instruction in operation content for the heat source equipment, and transmitting the instruction in operation content to the heat source equipment, the heat source equipment transmitting to the controller an actual operation content actually executed by the heat source equipment. The controller is comparing the actual operation content having been received from the heat source equipment with the operation content having been instructed from the direct digital controller to the heat source equipment, and, upon the actual operation content actually executed by the heat source equipment being a different operation content different from the operation content specified by the instruction, notifying the direct digital controller of the different operation content, thereby reflecting the different operation content in the control of the air blower kept by the direct digital controller or in the instruction given to the heat source equipment.

### BRIEF DESCRIPTION OF THE DRAWINGS

FIG. 1 is a block diagram illustrating a configuration of an embodiment.
FIG. 2 is a view illustrating a signal format of a notification signal in the embodiment.
FIG. 3 is a view illustrating a modification of the signal format of the notification signal as shown in FIG. 2.
FIG. 4 is a view illustrating another modification of the signal format of the notification signal as shown in FIG. 2.

### DETAILED DESCRIPTION

An embodiment will be described with reference to the accompanying drawings.

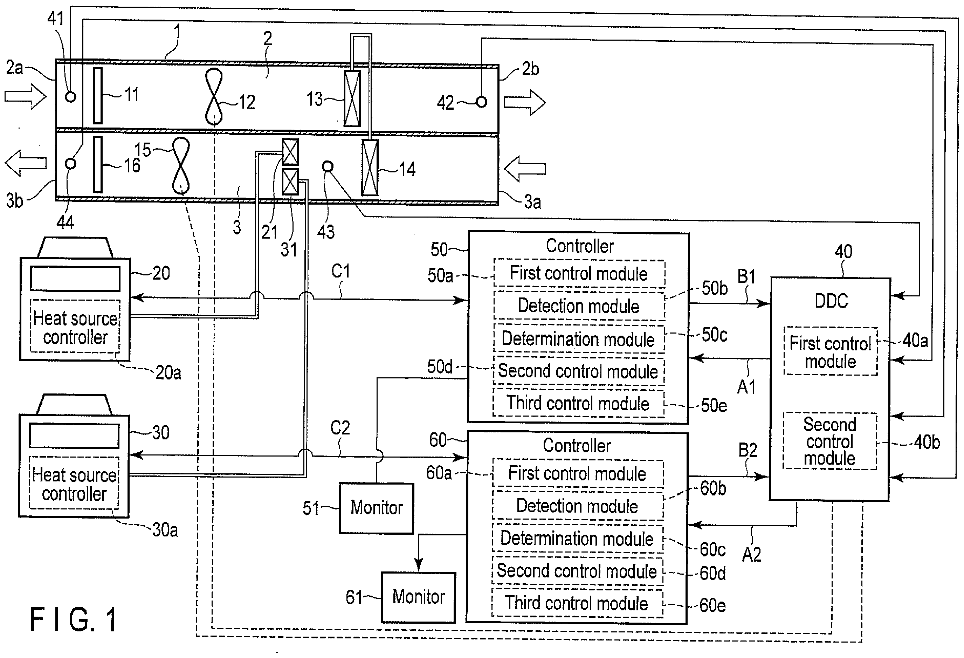

A main body 1 of an air handling unit as shown in FIG. 1 includes a ventilation flue (first ventilation flue) 2 and a ventilation flue (second ventilation flue) 3 which are arranged adjacent to each other in the main body 1. The main body 1 is provided, for example, in such a way as to penetrate a wall of a building. Through the ventilation flue 2, space to be air-conditioned in a room communicates with outdoor space.

The ventilation flue 2 includes a return-air opening 2a open to the to-be-air-conditioned space in the room and an exhaust opening 2b open to the outdoor space, and guides air which flows from the to-be-air-conditioned space into the return-air opening 2a to the exhaust opening 2b to exhaust the air to the outdoor space. The ventilation flue 3 includes an outside-air intake opening 3a open to the outdoor space and an air supply opening 3b open to the space to be air-conditioned, and guides outside air which flows from the outdoor space into the outside-air intake opening 3a to the air supply opening 3b to supply the outside air to the space to be air-conditioned.

From the return-air opening 2a of the ventilation flue 2 to the exhaust opening 2b thereof, an air filter 11 for removing dust, an air blower 12 for ventilation and a total heat exchanger 13 are arranged in this order. When the air blower 12 is operated, air in the space to be air-conditioned flows into the return-air opening 2a, and then flows through the air filter 11, the air blower 12 and the total heat exchanger 13, and is exhausted to the outdoor space through the exhaust opening 2b.

From the outside-air intake opening 3a of the ventilation flue 3 to the air supply opening 3b thereof, a total heat exchanger 14, air heat exchangers 21 and 31, an air blower 15 for supplying air and an air filter 16 for removing dust are arranged in this order. When the air blower 15 is operated, outside air is drawn into the outside-air intake opening 3a, then flows through the total heat exchanger 14, the air heat exchangers 21 and 31, the air blower 15 and the air filter 16, and is supplied to the space to be air-conditioned through the air supply opening 3b.

In the ventilation flue 2, a return-air temperature sensor 41 is provided close to the return-air opening 2a, and an exhaust-air temperature sensor 42 is provided close to the exhaust opening 2b. In the ventilation flue 3, a total heat-air temperature sensor 43 is provided between the total heat exchanger 14 and the air heat exchangers 21 and 31, and a supply-air temperature sensor 44 is provided close to the air supply opening 3b.

The total heat exchangers 13 and 14 are connected to each other by a water pipe, and air flowing into the total heat exchanger 13 and outside air flowing into the total heat exchanger 14 exchange heat with each other through water flowing in the water pipe. That is, heat of air flowing in the ventilation flue 2 is given to outside air flowing in the ventilation flue 3 (it propagates to the outside air).

The air heat exchangers 21 and 31 are arranged in a direction perpendicular to the flowing direction of air in the ventilation flue 3, and respectively connected to the heat source equipment 20 and the heat source equipment 30 provided outside the main body 1 by refrigerant pipes.

The heat source equipment 20 includes a compressor, a four-way valve, an outdoor heat exchanger and an expansion valve, and the compressor and the air heat exchanger 21 provide a heat-pump refrigeration cycle system. During air cooling, the heat source equipment 20 feeds a refrigerant discharged from the compressor to the outdoor heat exchanger through the four-way valve, and returns the refrigerant flowing from the outdoor heat exchanger to the compressor through the expansion valve, the air heat exchanger 21 and the four-way valve; and during heating, the heat source equipment 20 feeds the refrigerant discharged from the compressor to the air heat exchanger 21 through the four-way valve, and returns the refrigerant flowing from the air heat exchanger 21 to the compressor through the expansion valve, the outdoor heat exchanger and the four-way valve. The heat source equipment 30 includes the same refrigeration cycle components as the heat source equipment 20, and is connected to the air heat exchanger 31.

The return-air temperature sensor 41, the exhaust-air temperature sensor 42, the total heat air temperature 43 and the supply-air temperature sensor 44 are connected to a direct digital controller (DDC) 40 which is a controller for the air handling unit, by a signal line. The DDC 40 issues to the heat source equipment 20 and the heat source equipment 30 capability control signals A1 and A2 produced in accordance with temperatures (supply and exhaust air temperature conditions) detected by the return-air temperature sensor 41, the exhaust-air temperature sensor 42, the total heat air temperature 43 and the supply-air temperature sensor 44.

To be more specific, the DDC 40 includes a first control module 40a and a second control module 40b as main functional modules.

The first control module 40a controls the amount of air to be supplied from the air blowers 12 and 15 and the capabilities of the heat source equipment 20 and 30 in accordance with the temperatures detected by the return-air temperature sensor 41, the exhaust-air temperature sensor 42, the total heat air temperature 43 and the supply-air temperature sensor 44, such that the temperature of air for air conditioning which is supplied to the space to be air-conditioned becomes equal to a predetermined set temperature. It should be noted that as a capability control over the heat source equipment 20 and 30, the first control module 40a issues to the heat source equipment 20 and 30, capability control signals A1 and A2 for setting operation frequencies F1 and F2 of the compressors in the heat source equipment 20 and 30 to target operation frequencies F1t and F2t, through controllers (control modules of the heat source equipments for the air handling unit) 50 and 60 to be described later. The target operation frequencies F1t and F2t include zero Hz in the case of stopping the operations of the compressors.

It should be noted that the target operation frequencies F1t and F2t are set such that the temperature detected by the supply-air temperature sensor 44 becomes equal to a set value.

The second controller 40b corrects control content regarding the air handling unit based on notification signals sent from the controllers 50 and 60.

After the DDC 40 is installed, a worker at a place where the DDC 40 is installed can set or change a control condition (control program) for the heat source equipment 20 and 30 in accordance with the environment of the place, etc. It should be noted that as correction of the control content based on the notification signals, various corrections can be made by changing the setting of the control program. However, the following explanation is given by referring to an example of a correction of the capability control (the capability control signals A1 and A2) over the heat source equipment 20 and 30, which is made in based on the notification signals.

In general, as an output signal of the DDC 40, an analog signal is applied in order that it be used for various purposes. The capability control signal A1 is an analog signal the voltage level of which is variable within the range of 0 to 10 V. By changing the voltage level, a target operation frequency F1t is specified. The capability control signal A2 is an analog signal the voltage level of which is variable within the range of 0 to 10 V. By changing the voltage level, a target operation frequency F2t is specified.

Thus, in order for the heat source equipment 20 and 30 to directly receive signals from the DDC 40, the heat source equipment 20 and 30 need to perform processing to receive analog signals, and confirm from the analog signals what instruction is given.

However, since the heat source equipments (outdoor equipments) 20 and 30, which are used for an ordinary air conditioner, are connected to specific indoor equipment, they use a digital signal to bus-communicate or serial-communicate with the specific indoor equipment. They thus do not have a function of receiving an analog signal or processing it. Accordingly, heat source equipment 20 and 30 specific for the air handling unit must be developed. In order to avoid such troublesomeness and standardize the above heat source equipment 20 and 30 according to the embodiments, the controllers 50 and 60, which perform signal conversion such that the heat source equipment 20 and 30 for the air conditioner can receive an instruction from the DDC 40, are provided between communication lines between the DDC 40 and the heat source equipment 20 and 30.

Conventional controllers 50 and 60 convert analog signals from the DDC 40, which represent instructions to the heat source equipment 20 and 30, into digital signals which can be received by the heat source equipment 20 and 30; and transmit the digital signals to the heat source equipment 20 and 30 as a one-way communication.

On the other hand, the controller 50 according to the embodiment, which is a control module of the heat source equipment for the air handling unit, is connected to the DDC 40 by an analog signal line for receiving the capability control signal A1 and a digital signal line for transmitting a notification signal B1 to be described later to the DDC 40. The controller 50 is also connected to the heat source controller 20a of the heat source equipment 20 by a data bus C1 for control. Similarly, the controller 60 is connected to the DDC 40 by an analog signal line for receiving the capability control signal A2 and a digital signal line for transmitting a notification signal B2 to be described later to the DDC 40, and is also connected to a heat source controller 30a of the heat source equipment 30 by a data bus C2 for control. The controllers 50 and 60 are connected to monitors 51 and 61 for displaying their operation states, respectively.

The controller 50 includes as main function elements a first control module 50a, a detection module 50b, a determination module 50c, a second control module 50d and a third control module 50e. It should be noted that the controller 60 has the same structure as the controller 50, and its explanation will thus be omitted.

The first control module 50a notifies the heat source controller 20a of a capability (target operation frequency F1s) represented by the capability control signal A1, for example, a digital data signal representing a resolution which can be expressed on a scale of 16 stages, that is transmitted through the data bus C1 for control.

The detection module 50b sends as needed an inquiry to the heat source controller 20a to detect the capability of the heat source equipment 20 (the operation frequency F1 of the compressor therein).

The determination module 50c determines whether the capability (operation frequency F1) detected by the detection module 50b reaches the capability (target operation frequency F1t) represented by the digital data signal or not.

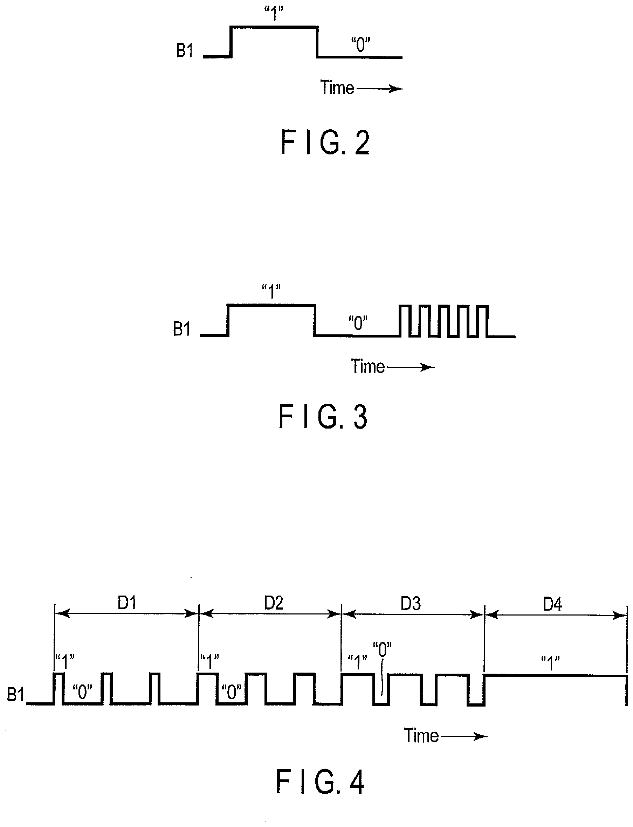

The second control module 50d notifies the DDC 40 of the result of the above determination by the determination module 50c, using a notification signal B1 having a pattern of logics 1 and 0 as shown in FIG. 2, as a signal for correction of the capability control signal A1.

The third control module 50e indicates the result of the determination by the determination module 50c, by causing, for example, characters or an image to be displayed on the monitor 51.

It should be noted that logic 1 of the notification signal B1 means that the operation frequency F1 of the compressor in the heat source equipment 20 reaches the target operation frequency F1t represented by the capability control signal A1 (F1 ≥ F1t). Logic 0 of the notification signal B1 means that the operation frequency F1 does not reach the target operation frequency F1t (F1 < F1t).

It should be noted that when the operation frequency is transiently changed, i.e., in a period in which a value specified by the DDC 40 regarding the operation frequency is changed, and the heat source equipment 20 copes with such a change, the specified value represented by the capability control signal A1 is necessarily inconsistent with the target operation frequency F1t for several seconds to several tens of seconds. With respect to such a transient inconsistency, such a determination as described above is not made.

Next, the operation will be explained.

The DDC 40 controls the amount of air to be supplied from the air blowers 12 and 15 such that the temperature of air for air conditioning which is supplied from the ventilation flue 3 into the space to be air-conditioned becomes equal to a set temperature, and also issues capability control signals A1 and A2 to the heat source equipment 20 and 30. For example, if the difference between the temperature of the air for air conditioning and the set temperature is great, the DDC 40 issues capability control signals A1 and A2 for raising the operation frequencies F1 and F2 or capability control signals A1 and A2 for switching the operation of the heat source equipment 20 and 30 from a single-unit operation to a two-unit operation. If the temperature of the air for air conditioning exceeds the set temperature to cause an overshoot, the DDC 40 issues capability control signals A1 and A2 for lowering the operation frequencies F1 and F2 or capability control signals A1 and A2 for switching the operation of the heat source equipment 20 and 30 from the two-unit operation to the single-unit operation.

The controllers 50 and 60 receives the capability control signals A1 and A2 issued from the DDC 40, and notify the heat controllers 20a and 30a of the heat source equipment 20 and 30 of the target operation frequencies F1t and F2t determined based on the capability control signals A1 and A2. The heat source controllers 20a and 30a set the operation frequencies F1 and F2 of the compressors in the heat source equipment 20 and 30 to the target operation frequencies F1t and F2t of which the controllers 50 and 60 notify the heat source controllers 20a and 30a.

The controllers 50 and 60 sends as needed an inquiry to the heat source controllers 20a and 30a to detect actual operation frequencies F1 and F2 of the compressors in the heat source equipment 20 and 30, and determine whether the detected operation frequencies F1 and F2 reach the target operation frequencies F1t and F2t or not. In order to compare the detected operation frequencies with the target operation frequencies F1t and F2t, the controllers 50 and 60 include respective memories to store data on target operation frequencies F1t and F2t represented by capability control signals A1 and A2 last issued by the DDC 40.

Then, the controllers 50 and 60 notify the DDC 40 of the result of the above determination as data for correction of the capability control signals A1 and A2, using notification signals B1 and B2; and also indicate the result of the determination by causing, for example, characters or an image to be displayed on the monitors 51 and 61.

Upon reception of the notification signals B1 and B2, the DDC 40 recognizes from the notification signals B1 and B2 whether the operation frequencies F1 and F2 reach the target operation frequencies F1t and F2t or not.

For example, there is a case where even if the operation frequencies F1 and F2 reach the target operation frequencies F1t and F2t, the temperature of the air for air conditioning will not easily reach the set temperature. The DDC 40 determines that such a case occurs, when in the notification signals B1 and B2, logic 1 continues for a predetermined time period. When the DDC 40 makes such a determination, it also determines the above target operation frequencies F1t and F2t as operation frequencies at which the air conditioning capability is insufficient, corrects the target operation frequencies F1t and F2t to raise them, and issue capability controls signals A1 and A2 for designating the corrected target operation frequencies F1t and F2t.

As described above, the controllers 50 and 60 determine whether the operation frequencies F1 and F2 of the compressors in the heat source equipment 20 and 30 reach target operation frequencies F1t and F2t represented by the capability control signals A1 and A2 issued from the DDC 40 or not, and notify the DDC 40 of the result of the above determination as data on correction of the capability control over the heat source equipment 20 and 30. Thus, if the capability control represented by the capability control signals A1 and A2 from the DDC 40 is not actually executed by the heat source equipment 20 and 30, it is compensated for. This thus ensures the space to be air-conditioned is comfortable.

The results of the determination by the controllers 50 and 60 are indicated by causing characters or an image to be displayed on the monitors 51 and 52. Therefore, the operator can easily know the present states of the heat source equipment 20 and 30.

### [Modification]

In the above embodiment, the DDC 40 is notified of the result of determination on whether the operation frequencies F1 and F2 reach the target operation frequencies F1t and F2t or not, using notification signals B1 and B2 having a pattern of logics 1 and 0. However, notification signals B1 and B2 which further has in addition to a pattern of logics 1 and 0, a pattern in which logics 1 and 0 alternately repeat for a short period as shown in FIG. 3 may be used. Logic 1 means that the operation frequencies F1 and F2 of the compressor in the heat source equipment 20 are equal to the target operation frequencies F1t and F2t represented by the capability control signals A1 and A2 (F1 = F1t, F2 = F2t). Logic 0 means that the operation frequencies F1 and F2 are less than the target operation frequencies F1t and F2t (F1 < F1t, F2 < F2t). The pattern in which logics 1 and 0 repeat in a short period means that the operation frequencies F1 and F2 exceed the target operation frequencies F1t and F2t (F1 > F1t, F2 > F2t).

In the above embodiment, the DDC 40 is notified of only the result of determination on whether the operation frequencies F1 and F2 of the compressors in the heat source equipment 20 and 30 reach the target operation frequencies F1t and F2t or not, using the notification signals B1 and B2. However, in addition to this structural feature, as another structural feature, the DDC 40 may be further notified of execution of a high-pressure release control, a low-pressure release control, a defrosting operation or the like, using the notification signals B1 and B2.

To be more specific, when the heat source controllers 20a and 30a enter the high-pressure release control, the low-pressure release control or the defrosting operation, they notify the controllers 50 and 60 that they enter the above control or operation state. Furthermore, the controllers 50 and 60 notify, using notification signals B1 and B2, the DDC 40 of the control or operation state of which they are notified by the heat source controllers 20a and 30a.

It should be noted that the high-pressure release control is a control of forcibly lowering the operation frequencies F1 and F2 (the numbers of revolutions) of the compressors such that the pressures of high-pressure units of the refrigeration cycle systems of the heat source equipment 20 and 30 do not exceed an acceptable pressure set value, and the low-pressure release control is a control of forcibly raising the operation frequencies F1 and F2 (the numbers of revolutions) of the compressors of the heat source equipment 20 and 30 such that the pressures of low-pressure units of the refrigeration cycle systems of the heat source equipment 20 and 30 do not fall below an acceptable pressure set value. Furthermore, during the defrosting operation of the heat source equipment 20 and 30, they operate at predetermined defrosting-operation frequencies of the compressors. In any of the high-pressure release control, the low-pressure release control and the defrosting operation, the operation frequencies F1 and F2 are not equal to the target operation frequencies F1t and F2t represented by the capability control signals A1 and A2.

In this case, the notification signals B1 and B2 may be produced to further include a pattern having different on-off duties as shown in FIG. 4. The on-off duty is a ratio of the period of logic 1 to a single cycle in which logic 1 and logic 0 are present. In on-off duty D1 (for example, 10%), the high-pressure control is executed. In on-off duty D2 (for example, 40%), the low-pressure release control is executed. In on-off duty D3 (for example, 70%), the defrosting operation is performed.

The heat source equipment 20 and 30 are operated at operation frequencies different from the target operation frequencies F1t and F2t represented by capability control signals A1 and A2, which are issued by the DDC 40 after the DDC 40 receives such notification signals as described above. Thus, the DDC 40 can be made to have a function of performing a control operation for restricting the influence of the operations of the heat source equipment 20 and 30 at the operation frequencies different from the target operation frequencies F1t and F2t.

The DDC 40 receives notification signals B1 and B2 from the controllers 50 and 60, which represent the control states thereof. For example, if the DDC 40 is notified from the notification signals B1 and B2 that the heat source equipment 20 and 30 performs the high-pressure control, it causes the fan 15 to increase the amount of air from the fan 15, since the amount of heat to be supplied to the main body 1 of the air handling unit is reduced when the heat source equipment 20 and 30 performs the high-pressure control. Also, in the case of giving it a higher priority to keep constant the temperature of air to be made to blow, than the amount of heat to be supplied, the DCC 40 causes the fan 15 to reduce the amount of air from the fan 15. Furthermore, when the defrosting operation is performed, cold air blows even during a heating operation. Thus, the DDC 40 may stop the fan 15.

In the embodiment, two independent heat source equipment, i.e., the heat source equipment 20 and heat source equipment 30, are used. Since there is a very low probability that the heat sources 20 and 30 will enter the defrosting operation at the same time, during the defrosting operation of one of the heat source equipment 20 and 30, the DDC 40 may be set to issue to the other heat source a capability control signal A1 or A2 representing a higher target operation frequency F1t or F2t of the other heat source than in a regular operation. It is therefore possible to restrict lowering of a heating capability.

Furthermore, the controllers 50 and 60 may be set to transmit to the DDC 40 notification signals indicating 5 minutes before the starts of the defrosting operations of the heat source equipment 20 and 30. As these signals, signals having on-off duty D4 (for example, 100%) can be used. It may be set that if the DDC 40 receives notification signals indicating 5 minutes before the starts of the defrosting operation, it transmits to the controllers 50 and 60 capability control signals A1 and A2 representing higher target operation frequencies F1t and F2t than in the regular operation, in order that the heating capabilities be set to be enforced in advance, and then when the defrosting operation is performed, lowering of the room temperature is restricted.

As described above, according to the embodiment, if the heat source equipment 20 and 30 performs operations different from operations corresponding to operation content of the heat source equipment 20 and 30, which is specified by an instruction given from the DDC 40, which is a controller for the air handling unit, the controllers 50 and 60 can notify the DDC 40 of the above different operation content. As a result, the worker who installs the air handling unit can set the DDC 40 to cause it to perform a control operation which reduces a disadvantage which will be caused when the heat source equipment 20 and 30 performs different operations from the operations corresponding to the operation content specified by the instruction.

The above embodiment and modification have been presented by way of example only, and are not intended to limit the scope of the invention which is defined in the appended claims.

## Claims

1. A controller (50, 60) for heat source equipment (20, 30) connected to an air handling unit (1), the air handling unit (1) comprising an air blower (15) which draws in outside air, a heat exchanger (21, 31) which causes the outside air drawn in by the air blower (15) and a refrigerant fed from the heat source equipment (20, 30) to exchange heat with each other, the air handling unit (1) being provided to supply as air for air conditioning, air passing through the heat exchanger (21, 31) to space to be air-conditioned, further comprising a direct digital controller (40) controlling the air blower (15) and giving an instruction in operation content to the heat source equipment (20, 30),
the controller (50, 60) being connected between the direct digital controller (40) and the heat source equipment (20, 30), receiving from the direct digital controller (40) the instruction in operation content for the heat source equipment (20, 30), and transmitting the instruction in operation content to the heat source equipment (20, 30),
the heat source equipment (20, 30) transmitting to the controller (50, 60) an actual operation content actually executed by the heat source equipment (20, 30), **characterized in that**
the controller (50, 60) is comparing the actual operation content having been received from the heat source equipment (20, 30) with the operation content having been instructed from the direct digital controller (40) to the heat source equipment (20, 30), and, upon the actual operation content actually executed by the heat source equipment (20, 30) being a different operation content different from the operation content specified by the instruction, notifying the direct digital controller (40) of the different operation content, thereby reflecting the different operation content in the control of the air blower (15) kept by the direct digital controller (40) or in the instruction given to the heat source equipment (20, 30).

2. The controller (50, 60) of Claim 1, **characterized in that** the operation corresponding to the operation content different from the operation content specified by the instruction is an operation which is performed by the heat source equipment (20, 30) with a capability different from a capability specified by the instruction.

3. The controller (50, 60) of Claim 1, **characterized in that** the operation corresponding to the operation content different from the operation content specified by the instruction is a protection control which is uniquely executed by the heat source equipment (20, 30).

4. The controller (50, 60) of Claim 1, **characterized in that** the operation corresponding to the operation content different from the operation content specified by the instruction is a defrosting operation of the heat source equipment (20, 30).

## Patentansprüche

1. Steuerung (50, 60) für eine Wärmequellenausrüstung (20, 30), die mit einem Klimagerät (1) verbunden ist, wobei das Klimagerät (1) ein Luftgebläse (15), das Außenluft ansaugt, einen Wärmetauscher (21, 31), der die vom Luftgebläse (15) angesaugte Außenluft und ein von der Wärmequellenausrüstung (20, 30) zugeführtes Kältemittel dazu veranlasst, Wärme miteinander auszutauschen, aufweist, wobei das Klimagerät (1) dazu ausgebildet ist, Luft als Luft für die Luft-Klimatisierung, durch den Wärmetauscher (21, 31) in den zu klimatisierenden Raum zu leiten, weiterhin aufweisend eine direkte digitale Steuerung (40), die das Luftgebläse (15) steuert und der Wärmequellenausrüstung (20, 30) eine Anweisung in Form eines Betriebsinhaltes gibt,
wobei die Steuerung (50, 60) zwischen der direkten digitalen Steuerung (40) und der Wärmequellenausrüstung (20, 30) verbunden ist, von der direkten digitalen Steuerung (40) die Anweisung in Form des Betriebsinhaltes für die Wärmequellenausrüstung (20, 30) empfängt und die Anweisung in Form des Betriebsinhaltes an die Wärmequellenausrüstung (20, 30) übermittelt,
die Wärmequellenausrüstung (20, 30) an die Steuerung (50, 60) einen tatsächlichen Betriebsinhalt übermittelt, der tatsächlich von der Wärmequellenausrüstung (20, 30) ausgeführt wird, **dadurch gekennzeichnet, dass**
die Steuerung (50, 60) den tatsächlichen Betriebsinhalt, der von der Wärmequellenausrüstung (20, 30) empfangen wurde, mit dem Betriebsinhalt, der von der direkten digitalen Steuerung (40) an die Wärmequellenausrüstung (20, 30) angewiesen wurde, vergleicht, und wenn der tatsächliche Betriebsinhalt, der tatsächlich von der Wärmequellenausrüstung (20, 30) ausgeführt wird, ein sich von dem durch die Anweisung vorgegebenen Betriebsinhalt unterscheidender anderer Betriebsinhalt ist, die direkte digitale Steuerung (40) über den anderen Betriebsinhalt informiert, wodurch der andere Betriebsinhalt in der Steuerung des von der direkten digitalen Steuerung (40) versorgten Luftgebläses (15) oder in der Anweisung an die Wärmequellenausrüstung (20, 30) widergespiegelt wird.

2. Steuerung (50, 60) nach Anspruch 1, **dadurch gekennzeichnet, dass** der Betrieb, der dem Betriebsinhalt entspricht, der sich von dem durch die Anweisung vorgegebenen Betriebsinhalt unterscheidet, ein Betrieb ist, der von der Wärmequellenausrüstung (20, 30) mit einer Leistungsfähigkeit ausgeführt wird, die sich von einer durch die Anweisung vorgegebenen Leistungsfähigkeit unterscheidet.

3. Steuerung (50, 60) nach Anspruch 1, **dadurch gekennzeichnet, dass** der Betrieb, der dem Betriebsinhalt entspricht, der sich von dem durch die Anweisung vorgegebenen Betriebsinhalt unterscheidet, eine Schutzsteuerung ist, die eindeutig von der Wärmequellenausrüstung (20, 30) ausgeführt wird.

4. Steuerung (50, 60) nach Anspruch 1, **dadurch gekennzeichnet, dass** der Betrieb, der dem Betriebsinhalt entspricht, der sich von dem durch den Befehl vorgegebenen Betriebsinhalt unterscheidet, ein Abtauvorgang der Wärmequellenausrüstung (20, 30) ist.

## Revendications

1. Contrôleur (50, 60) pour un équipement de source de chaleur (20, 30) connecté à une unité de traitement d'air (1), l'unité de traitement d'air (1) comprenant une soufflerie à air (15) qui aspire de l'air extérieur, un échangeur de chaleur (21, 31) qui amène l'air extérieur aspiré par la soufflerie à air (15) et un réfrigérant alimenté depuis l'équipement de source de chaleur (20, 30) à échanger de la chaleur l'un avec l'autre, l'unité de traitement d'air (1) étant prévue pour fournir à titre d'air pour un conditionnement d'air, de l'air passé à travers l'échangeur de chaleur (21, 31) vers un espace qu'il s'agit de climatiser, comprenant en outre un contrôleur numérique direct (40) commandant la soufflerie à air (15) et donnant une instruction d'une modalité de fonctionnement à l'équipement de source de chaleur (20, 30),
le contrôleur (50, 60) étant connecté entre le contrôleur numérique direct (40) et l'équipement de source de chaleur (20, 30), recevant depuis le contrôleur numérique direct (40) l'instruction d'une modalité de fonctionnement pour l'équipement de source de chaleur (20, 30), et transmettant l'instruction d'une modalité de fonctionnement à l'équipement de source de chaleur (20, 30),
l'équipement de source de chaleur (20, 30) transmettant au contrôleur (50, 60) une modalité de fonctionnement réelle exécutée réellement par l'équipement de source de chaleur (20, 30),
**caractérisé en ce que**
le contrôleur (50, 60) compare la modalité de fonctionnement réelle ayant été reçue depuis l'équipement de source de chaleur (20, 30) avec la modalité de fonctionnement ayant été donnée en tant qu'instruction depuis le contrôleur numérique direct (40) à l'équipement de source de chaleur (20, 30), et, quand la modalité de fonctionnement réelle exécutée réellement par l'équipement de source de chaleur (20, 30) est une modalité de fonctionnement différente de la modalité de fonctionnement spécifiée par l'instruction, le contrôleur avertit le contrôleur numérique direct (40) de la modalité de fonctionnement différente, reflétant ainsi la modalité de fonctionnement différente dans la commande de la soufflerie à air (15) gardée par le contrôleur numérique direct (40) ou dans l'instruction donnée à l'équipement de source de chaleur (20, 30).

2. Contrôleur (50, 60) selon la revendication 1,
**caractérisé en ce que** le fonctionnement correspondant à la modalité de fonctionnement différente de la modalité de fonctionnement spécifiée par l'instruction est un fonctionnement qui est effectué par l'équipement de source de chaleur (20, 30) avec une capacité différente d'une capacité spécifiée par l'instruction.

3. Contrôleur (50, 60) selon la revendication 1,
**caractérisé en ce que** le fonctionnement correspondant à la modalité de fonctionnement différente de la modalité de fonctionnement spécifiée par l'instruction est une commande de protection qui est exécutée uniquement par l'équipement de source de chaleur (20, 30).

4. Contrôleur (50, 60) selon la revendication 1,
**caractérisé en ce que** le fonctionnement correspondant à la modalité de fonctionnement différente de la modalité de fonctionnement spécifiée par l'instruction est un fonctionnement de dégivrage de l'équipement de source de chaleur (20, 30).
